# EUROPEAN PATENT SPECIFICATION

(11) **EP 3 393 090 B1**
(45) Date of publication and mention of the grant of the patent: **06.05.2020**
(21) Application number: 16874815.0
(22) Date of filing: 13.12.2016
(51) Int. Cl.: H04L 12/58, H04M 1/725, G06F 3/0488

(54) **INSTANT MESSAGING APPARATUS AND METHOD**
SOFORTNACHRICHTENVORRICHTUNG UND -VERFAHREN
APPAREIL ET PROCÉDÉ DE MESSAGERIE INSTANTANÉE

(30) Priority: 15.12.2015 CN 201510940310
(43) Date of publication of application: 24.10.2018
(73) Proprietor: Zhejiang Geely Holding Group Co., Ltd., Zhejiang 310051 (CN); Zhejiang Geely Automobile Research Institute Co., Ltd., Taizhou, Zhejiang 317000 (CN)
(72) Inventor: LI, Shufu, Hangzhou City Zhejiang 310051 (CN)
(74) Representative: Ziebig & Hengelhaupt Patent- und Rechtsanwaltskanzlei PartG mbB
(86) International application number: PCT/CN2016/109727
(87) International publication number: WO 2017/101758

(56) References cited:
- WO-A1-2014/207701
- CN-A- 103 561 168
- CN-A- 103 986 841
- CN-A- 105 117 147
- CN-A- 105 429 860
- US-A1- 2013 095 799
- US-A1- 2013 111 377
- US-A1- 2013 253 950
- US-A1- 2015 312 175
- US-B1- 6 275 569

## Description

### Technical Field

The present invention relates to the technical field of communications, especially to an instant messaging device and method.

### Background of the Invention

With the development of mobile communication technology, an instant messaging device and method are more and more widely applied, and voice information are gradually more popular at present than text information in the past, for example, Wechat, whatsapp, etc. are widely welcomed among mobile terminal users.

Moreover, voice information is for replacing the text information function; the voice information function utilizes the conversation mode of imitating two-way radio and records voice information by pressing a key and sending the voice information by releasing the key, so that the user experiences the fun of instant communication. In this way, not only text entry from the user can be reduced, instant communication can be conveniently used when the user is under the condition of, for example, driving, improving the convenience and fastness of instant messaging, and thus improving usage experience of the user.

However, sending voice information in a current instant messaging device and method needs a virtual button being pressed at a specific position for operation, and the user can only click the correct position by watching the screen, bringing usage trouble for the user to some extent, increasing the number of times of lowering the head to operate, taking driving as an example, increasing the risk of operation during driving.

US 2013/111377 A1 and US 2015/312175 A1 disclose portable electronic devices capable of creating electronic communications based on sound inputs.

### Summary of the Invention

One purpose of the present invention is to provide an instant messaging device capable of realizing blind operation of a user.

One further purpose of the present invention is to provide an instant messaging method capable of realizing blind operation of a user.

Particularly, the present invention provides an instant messaging device, comprising:
a touchable screen for displaying an instant messaging interface and capable of receiving a touch action from a user;
a touch detector for detecting the touch action of the user on the touchable screen, wherein the touch action comprises an action of voice recording and an action of voice sending;
an action interpreter for sending out a control instruction corresponding to the touch action in response to the touch action, wherein when the touch action serves as the action of voice recording, the corresponding control instruction is an instruction of voice recording, and when the touch action is the action of voice sending, the corresponding control instruction is an instruction of voice sending;
a voice recorder for starting recording in response to the instruction of voice recording, and in response to the instruction of voice sending, stopping recording and sending the currently recorded voice to a receiver in the instant messaging interface;
a listening-state device for recording the number of times that the user listens to the received specific voice; and
a synchronizer for synchronizing the number of listening times to an instant message interface of a sender of the specific voice.

Further, the action of voice recording is formed by the user continuously pressing the touchable screen at any position of the instant messaging interface for a pre-determined time period; and
the action of voice sending is formed by the user continuously pressing the touchable screen at the current position and then releasing after sending the instruction of voice recording.

Further, the action of voice recording is formed by the user continuously pressing the touchable screen at any position of the instant messaging interface for a pre-determined time period and then double clicking the touchable screen for a plurality of times, wherein the double clicks refers to continuously clicking the same position or approximately the same position more than twice;
the action of voice sending is formed by the user pressing and then releasing the touchable screen at any position of the instant messaging interface after sending out the instruction of voice recording;
optionally, the number of double clicks is within six; and
optionally, the time interval between two double clicks is 1 second, or is not greater than 1 second, preferably not greater than 0.5 second.

Further, the instant messaging device also comprises:
a prompter for sending out a prompt signal to a user in response to an instruction of recording prompt,
wherein the action interpreter is also configured to send out the instruction of recording prompt in response to the action of voice recording; and
optionally, the instruction of recording prompt and the instruction of voice recording are simultaneously sent out by the action interpreter.

Further, the prompter comprises:
a graphic prompt unit for presenting a pre-determined prompt graph in the instant messaging interface in response to the instruction of recording prompt; optionally, the prompt graph is a virtual button centered at the current position; and optionally, the virtual button is a circular virtual button, a square virtual button or a rectangular virtual button;
a vibration prompt unit for enabling the touchable screen to vibrate in response to the instruction of recording prompt; and/or
an audio prompt unit for sending out a prompt tone in response to the instruction of recording prompt.

Further, the touch action further comprises an action of cancelling voice-sending, a corresponding control instruction of which is an instruction of cancelling voice-sending,
wherein the voice recorder stops the recording and does not execute the voice-sending operation in response to the instruction of cancelling voice-sending.

Further, the action of cancelling voice-sending is a sliding operation from the current position to another position executed by the user on the touchable screen after the instruction of voice recording is sent out; and
optionally, the action of cancelling voice-sending is a sliding operation from the current position to another position along any direction.

Further, the instant messaging device also comprises:
a graphic prompt unit for presenting a virtual button centered at the current position in the instant messaging interface in response to the instruction of recording prompt;
the action of cancelling voice-sending is a sliding operation of sliding from the current position to a position other than the virtual button along any direction; and
optionally, the virtual button is a circular virtual button, a square virtual button or a rectangular virtual button.

Further, the action of voice recording is formed by the user continuously pressing the touchable screen at any position of the instant messaging interface for a pre-determined time period; and
the action of voice sending is formed by the user continuously pressing the touchable screen at the current position and then releasing after sending the instruction of voice recording; and
the action of cancelling voice-sending and the action of voice recording are actions executed continuously without releasing the touchable screen.

Further, the instant messaging device also comprises:
a voice judger for determining a signal to noise ratio of the recorded voice; and
a window generator for generating a confirmation window in the instant messaging interface in response to the action of voice sending when the signal to noise ratio is lower than a pre-set threshold, and for receiving a confirmation instruction manually input by the user indicating whether it is allowed to send out the recorded voice,
wherein the voice recorder is also configured to send the currently recorded voice to the receiver in the instant messaging interface in response to a confirmation instruction input by the user indicating that sending out is allowed when the signal to noise ratio is lower than the pre-set threshold.

Further, the instant messaging device also comprises:
a listening-state device for recording the number of times that the user listens to the received specific voice; and
a synchronizer for synchronizing the number of listening times to an instant message interface of a sender of the specific voice.

The present invention also provides an instant messaging method applied to a device with a touchable screen, wherein the touchable screen is used for displaying an instant messaging interface and is capable of receiving a touch action from a user, and the instant messaging method is carried out according to the following steps:
a step of touch detection of detecting the touch action of the user on the touchable screen, wherein the touch action comprises an action of voice recording and an action of voice sending;
a step of action interpretation of sending out a control instruction corresponding to the touch action in response to the touch action, wherein when the touch action serves as the action of voice recording, the corresponding control instruction is an instruction of voice recording, and when the touch action is the action of voice sending, the instruction of corresponding control is an instruction of voice sending;
a step of voice recording of starting recording in response to the instruction of voice recording, and in response to the instruction of voice sending, stopping recording and sending the currently recorded voice to a receiver in the instant messaging interface;
a step of listening state of recording the number of times that the user listens to the received specific voice; and
a step of synchronization of synchronizing the number of listening times to an instant message interface of a sender of the specific voice.

Further, the action of voice recording is formed by the user continuously pressing the touchable screen at any position of the instant messaging interface for a pre-determined time period; and
the action of voice sending is formed by the user continuously pressing the touchable screen at the current position and then releasing after sending the instruction of voice recording.

Further, the action of voice recording is formed by the user continuously pressing the touchable screen at any position of the instant messaging interface for a pre-determined time period and then double clicking the touchable screen for a plurality of times, wherein the double clicks refers to continuously clicking the same position or approximately the same position more than twice;
the action of voice sending is formed by the user pressing and then releasing the touchable screen at any position of the instant messaging interface after sending out the instruction of voice recording;
optionally, the number of double clicks is within six; and
optionally, the time interval between two double clicks is 1 second, or is not greater than 1 second, preferably not greater than 0.5 second.

Further, the instant messaging method also comprises:
a step of prompting of sending out a prompt signal to a user in response to an instruction of recording prompt,
wherein the step of action interpretation is also configured to send out the instruction of recording prompt in response to the action of voice recording; and
optionally, the instruction of recording prompt and the instruction of voice recording are simultaneously sent out by the step of action interpretation.

Further, the prompting step comprises:
a step of graphic prompt of presenting a pre-determined prompt graph in the instant messaging interface in response to the instruction of recording prompt; optionally, the prompt graph is a virtual button centred at the current position; and optionally, the virtual button is a circular virtual button, a square virtual button or a rectangular virtual button;
a step of vibration prompt of enabling the touchable screen to vibrate in response to the instruction of recording prompt; and/or
a step of audio prompt of sending out a prompt tone in response to the instruction of recording prompt.

Further, the touch action further comprises an action of cancelling voice-sending, a corresponding control instruction of which is an instruction of cancelling voice-sending,
wherein the step of voice recording stops the recording and does not execute the voice sending operation in response to the instruction of cancelling voice-sending.

Further, the action of cancelling voice-sending is a sliding operation from the current position to another position executed by the user on the touchable screen after the instruction of voice recording is sent out; and
optionally, the action of cancelling voice-sending is a sliding operation from the current position to another position along any direction.

Further, the instant messaging method also comprises:
a step of graphic prompt of presenting a virtual button centred at the current position in the instant messaging interface in response to the instruction of recording prompt;
the action of cancelling voice-sending is a sliding operation of sliding from the current position to a position other than the virtual button along any direction; and
optionally, the virtual button is a circular virtual button, a square virtual button or a rectangular virtual button.

Further, the action of voice recording is formed by the user continuously pressing the touchable screen at any position of the instant messaging interface for a pre-determined time period; and
the action of voice sending is formed by the user continuously pressing the touchable screen at the current position and then releasing after sending the instruction of voice recording; and
the action of cancelling voice-sending and the action of voice recording are actions executed continuously without releasing the touchable screen.

Further, the instant messaging method also comprises:
a step of voice judgement of determining a signal to noise ratio of the recorded voice; and
a step of window generation of generating a confirmation window in the instant messaging interface in response to the action of voice sending when the signal to noise ratio is lower than a pre-set threshold, so as to receive a confirmation instruction manually input by the user indicating whether it is allowed to send out the recorded voice,
wherein the step of voice recording is also configured to send the currently recorded voice to the receiver in the instant messaging interface in response to a confirmation instruction input by the user indicating that sending out is allowed when the signal to noise ratio is lower than the pre-set threshold.

Further, the instant messaging method also comprises:
a step of listening state of recording the number of times that the user listens to the received specific voice; and
a step of synchronization of synchronizing the number of listening times to an instant message interface of a sender of the specific voice.

With regard to the instant messaging device of the present invention, by means of the touch detector, the action interpreter and the voice recorder, the user continuously presses the instant messaging interface at any position to realize voice recording, and the user keeps pressing and then releases the touchable screen at the current position to realize voice sending; blind operation of voice communication is realized, thus the number of times that a user yields his/her head to operate an instant messaging device tends to zero, improving the convenience and fastness of operation to a great extent, and, taking driving as an example, thereby effectively reducing the risk of driving.

With regard to the instant messaging method of the present invention, by means of the step of touch detection, the step of action interpretation, and the step of voice recording, the user continuously presses the instant messaging interface at any position to realize voice recording, and the user keeps pressing and then releases the touchable screen at the current position to realize voice sending; blind operation of voice communication is realized, thus the number of times that a user yields his/her head to operate an instant messaging device tends to zero, improving the convenience and fastness of operation to a great extent, and, taking driving as an example, thereby effectively reducing the risk of driving.

According to the detailed description of specific embodiments of the present invention below in conjunction with the accompanying drawings, the above and other objectives, advantages and features will become more apparent to a person skilled in the art.

### Brief Description of the Drawings

Some specific embodiments of the present invention will be described below in detail with reference to the accompanying drawings by way of example but not by way of limitation. The same reference signs indicate the same or similar components or parts in the accompanying drawings. It is understood by a person skilled in the art that the drawings are not drawn to scale necessarily. In the accompanying drawings:
Figure 1 is a schematic assembly drawing of an instant messaging device according to one embodiment of the present invention being mounted in a mobile phone;
Fig. 2 is logic control diagram of an instant messaging device according to one embodiment of the present invention; and
Fig. 3 is an operational flowchart of an instant messaging method according to another embodiment of the present invention.

### Detailed Description of the Invention

### Embodiment 1

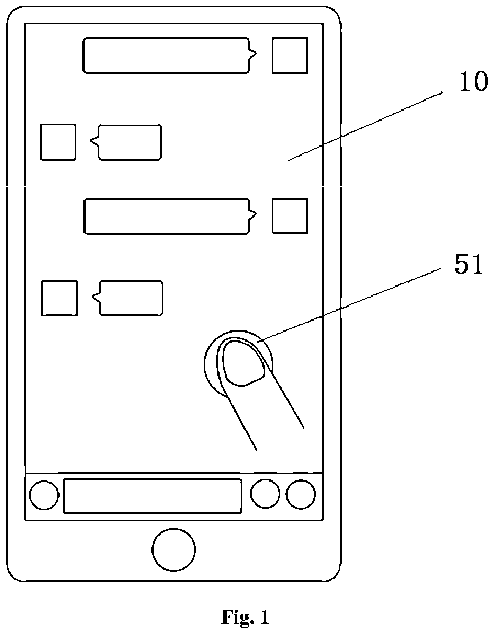

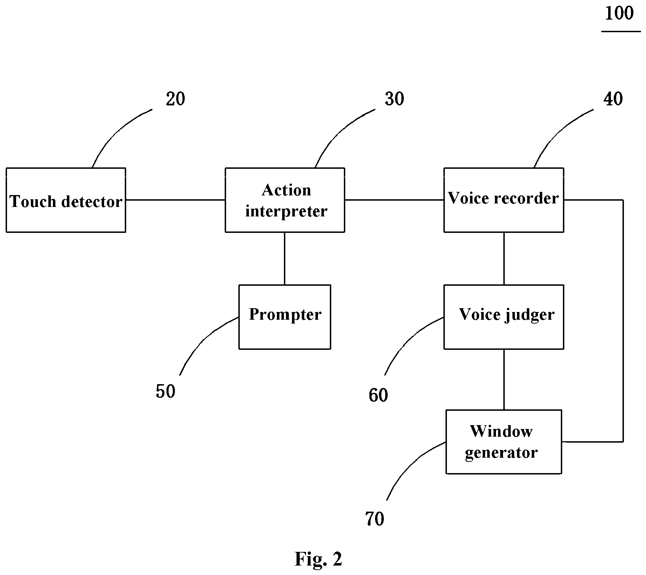

Figure 1 is a schematic assembly drawing of an instant messaging device according to one embodiment of the present invention being mounted in a mobile phone. Fig. 2 is logic control diagram of an instant messaging device according to one embodiment of the present invention. In this embodiment, explanation is made by mainly relying on Fig. 2, and reference can also be made to Fig. 1; the instant messaging device 100 can generally comprise:
a touchable screen 10 (see Fig. 1) for displaying an instant messaging interface and capable of receiving a touch action from a user;
a touch detector 20 for detecting the touch action of the user on the touchable screen 10, the touch action comprising an action of voice recording and an action of voice sending, wherein in this embodiment
the action of voice recording is formed by the user continuously pressing the touchable screen 10 at any position of the instant messaging interface for a pre-determined time period; and
the action of voice sending is formed by the user continuously pressing the touchable screen 10 at the current position and then releasing, after the instruction of voice recording is sent out; and
an action interpreter 30 for sending out a control instruction corresponding to the touch action in response to the touch action, wherein when the touch action serves as the action of voice recording, the corresponding control instruction is an instruction of voice recording, and when the touch action is the action of voice sending, the instruction of corresponding control is an instruction of voice sending; and
a voice recorder 40 for starting recording in response to the instruction of voice recording, and, in response to the instruction of voice sending, stopping recording and sending the currently recorded voice to a receiver in the instant messaging interface.

**Table 1**

| Touch action of touch detector | Instruction of action interpreter | Mode of voice recorder |
|---|---|---|
| Action of voice recording | Instruction of voice recording | Start recording |
| Action of voice sending | Instruction of voice sending | Stop recording and send currently recorded voice to receiver |

Table 1 is a corresponding relationship table of the touch detector 20, the action interpreter 30 and the voice recorder 40. See Fig. 2, in this embodiment, explanation is made by taking a mobile phone among mobile terminals as an example, by way of a user's finger or using a touch tool, for example a stylus pen, to press a touchable screen 10 of the mobile phone at any position for a pre-determined time period T, for example T being greater than 1 second, the touch detector 20 detects that the touch action of the user is an action of voice recording, and the corresponding action interpreter 30 provides a corresponding instruction of voice recording, and the voice recorder 40 starts recording; the user's finger or using the touch tool, for example the stylus pen, continuously presses the touchable screen 10 of the mobile phone and then releases the touchable screen 10, the touch detector 20 detects that the touch action of the user is an action of voice sending, the corresponding action interpreter 30 provides a corresponding instruction of voice sending, and the voice recorder 40 stops recording and sending the currently recorded voice to the receiver.

With regard to the instant messaging device 100 of the present invention, by means of the touch detector 20, the action interpreter 30 and the voice recorder 40, the user continuously presses the instant messaging interface at any position to realize voice recording, and the user keeps pressing and then releases the touchable screen 10 at the current position to realize voice sending; blind operation of voice communication is realized without the need for the user to watch the screen to find the recording key, thus the number of times that a user yields his/her head to operate an instant messaging device 100 tends to zero, improving the convenience and fastness of operation to a great extent, and, taking driving as an example, thereby effectively reducing the risk of driving.

See Fig. 1, in another embodiment, the action of voice recording is formed by the user continuously pressing the touchable screen 10 at any position of the instant messaging interface for a pre-determined time period and then double clicking the touchable screen for a plurality of times. Preferably, the number of double clicks is within six. The time interval between two double clicks is 1 second, or is not greater than 1 second, preferably not greater than 0.5 second. Of course, on other embodiments, another double click time and a corresponding time interval can also be choosing, as long as the purpose of continuously pressing can be reached. The action of voice sending is formed by the user pressing and then releasing the touchable screen 10 at any position of the instant messaging interface after sending out the instruction of voice recording.

By means of the above-mentioned operation, this embodiment not only realizes blind operation of voice communication, thus the number of times that a user yields his/her head to operate an instant messaging device 100 tends to zero, improving the convenience and fastness of operation to a great extent, and, taking driving as an example, thereby effectively reducing the risk of driving, but also realizes hands-free operation, further improving the convenience and fastness of the instant messaging device and the convenient of operation.

See Fig. 2, further, in this embodiment, the instant messaging device 100 can further comprise: a prompter 50, and the prompter 50 is used for sending a prompt signal to a user in response to an instruction of recording prompt,

wherein the action interpreter 30 is also configured to send out the instruction of recording prompt in response to the action of voice recording. Optionally, the instruction of recording prompt and the instruction of voice recording are simultaneously sent out by the action interpreter 30.

In this embodiment, by adding a prompter before recording voice, the problem that a user often speaks too early and the beginning of the voice record is not recorded due to that the user does not know when to start recording is solved, improving user experience.

See Fig. 2, further, the prompter 50 comprises a graphic prompt unit, a vibration prompt unit and/or an audio prompt unit. The prompter 50 can be a single graphic prompt unit, a vibration prompt unit or an audio prompt unit, can also be a graphic prompt unit and a vibration prompt unit, can also be a graphic prompt unit and an audio prompt unit, can also be a vibration prompt unit and an audio prompt unit, and can also be a graphic prompt unit, a vibration prompt unit and an audio prompt unit.

The graphic prompt unit is used for presenting a pre-determined prompt graph in the instant messaging interface in response to the instruction of recording prompt. Further, the prompt graph is a virtual button 51 centred at the current position. Much further, the virtual button 51 is a circular virtual button, a square virtual button or a rectangular virtual button. More particularly, a circular virtual button can be a virtual icon with a radius greater than or equal to 5mm, and a rectangular virtual button can be a rectangular icon with the same proportion as a mobile phone. A person skilled in the art knows that the shape of the virtual button 51 is not limited to the above-mentioned shape, and can be any shape, as long as it is practical and aesthetic.

The vibration prompt unit is used for enabling the touchable screen 10 to vibrate in response to the instruction of recording prompt.

The audio prompt unit is used for sending out a prompt tone in response to the instruction of recording prompt. The prompt tone of the audio prompt unit can be various types of prompt tones, and can be a built-in prompt tone, can also be a user-personalised prompt tone, and can also be a user-downloaded prompt tone.

**Table 2**

| Touch action of touch detector | Instruction of action interpreter | Mode of voice recorder |
|---|---|---|
| Action of cancelling voice-sending | Instruction of cancelling voice-sending | Stop the recording and not execute the voice sending operation |

Table 2 is a further corresponding relationship table of the touch detector 20, the action interpreter 30 and the voice recorder 40. See Fig. 2 and table 2, further, the touch action further comprises an action of cancelling voice-sending, a corresponding control instruction of which is an instruction of cancelling voice-sending, wherein the voice recorder 40 stops the recording and does not execute the voice sending operation in response to the instruction of cancelling voice-sending. In this embodiment, the convenience and fastness of using the instant messaging device 100 is improved by adding an action of cancelling voice-sending. Much further, the action of cancelling voice-sending is a sliding operation from the current position to another position executed by the user on the touchable screen 10 after the instruction of voice recording is sent out; and optionally, the action of cancelling voice-sending is a sliding operation from the current position to another position along any direction.

Further, in this embodiment, the instant messaging device 100 also comprises: a graphic prompt unit, and the graphic prompt unit is used for presenting a virtual button 51 centred at the current position in the instant messaging interface in response to the instruction of recording prompt. Preferably, the virtual button 51 is a circular virtual button, a square virtual button or a rectangular virtual button. The action of cancelling voice-sending is a sliding operation of sliding from the current position to a position other than the virtual button 51 along any direction, for example when the virtual button 51 is a circular virtual button; and the action of cancelling voice-sending is a sliding operation of sliding from the current position to a position other than the circular virtual button along any direction. Preferably, the instruction of cancelling voice-sending is triggered when the sliding distance of the finger is greater than 1 cm.

Much further, in this embodiment, the action of voice recording is formed by the user continuously pressing the touchable screen 10 at any position of the instant messaging interface for a pre-determined time period; the action of voice sending is formed by the user continuously pressing the touchable screen 10 at the current position and then releasing, after the instruction of voice recording is sent out; and the action of cancelling voice-sending and the action of voice recording are actions executed continuously without releasing the touchable screen 10.

Much further, in this embodiment, the action of voice recording is formed by the user continuously pressing the touchable screen 10 at any position of the instant messaging interface for a pre-determined time period and then double clicking the touchable screen for a plurality of times, wherein the double clicks refers to continuously clicking the same position or approximately the same position more than twice; the action of voice sending is formed by the user pressing and then releasing the touchable screen 10 at any position of the instant messaging interface after sending out the instruction of voice recording; The action of cancelling voice-sending is a sliding operation from the current position to another position pressed and executed by the user on any position of the instant messaging interface after the instruction of voice recording is sent out.

See Fig. 2, further, the instant messaging device 100 further comprises a voice judger 60 and a window generator 70. The voice judger 60 is used for determining a signal to noise ratio of the recorded voice; and the window generator 70 is used for generating a confirmation window in the instant messaging interface in response to the action of voice sending when the signal to noise ratio is lower than a pre-set threshold, for receiving a confirmation instruction manually input by the user indicating whether it is allowed to send out the recorded voice, wherein the voice recorder 40 is also configured to send the currently recorded voice to the receiver in the instant messaging interface in response to a confirmation instruction input by the user indicating that sending out is allowed when the signal to noise ratio is lower than the pre-set threshold.

In this embodiment, explanation is made by taking a mobile phone among mobile terminals as an example, when a user unconsciously touches the touchable screen 10 and triggers the voice recording function of the instant messaging device 100, the signal to noise ratio of the recorded voice is automatically judged by means of the instant messaging device 100. When the signal to noise ratio is lower than a pre-set threshold, the instant messaging device 100 will pop out a confirmation window for asking the user about whether to send the voice record, and a confirmation instruction about whether it is allowed to send the voice record is manually input by the user, thus adding the secondary confirmation of the user, reducing the probability of mis-operation.

Further, see Fig. 2, the instant messaging device 100 further comprises: a listening-state device and a synchronizer; the listening-state device is used for recording the number of times that the user listens to the received specific voice; and the synchronizer is used for synchronizing the number of listening times to an instant message interface of a sender of the specific voice.

The number of listening times of the recipient is displayed by the listening-state device, and the number of listening times is synchronized to the sender through the synchronizer, further improving the usage convenience and fastness of the instant message device 100.

Much further, as shown in Fig. 1, in this embodiment, the instant messaging interface is a display area occupying the entire touchable screen 10. Of course, in other embodiments, the instant messaging interface occupies a partial display are of the display area of the entire touchable screen 10.

### Embodiment 2

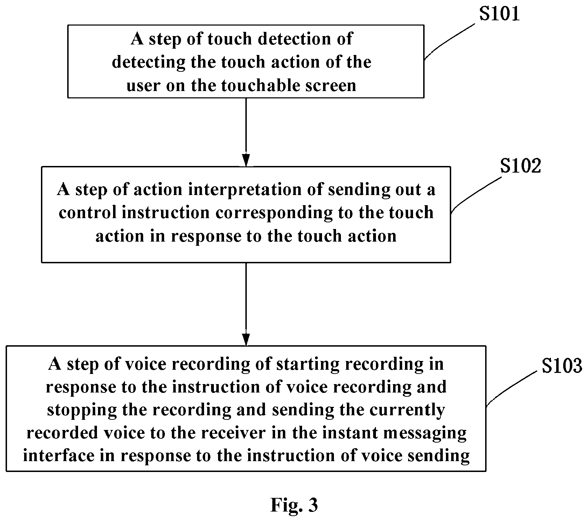

Fig. 3 is an operational flowchart of an instant messaging method according to another embodiment of the present invention. As shown in Fig. 3, the present invention also provides an instant messaging method applied to a device with a touchable screen 10 (see Fig. 1), wherein the touchable screen 10 (see Fig. 1) is used for displaying an instant messaging interface and is capable of receiving a touch action from a user, and the instant messaging method is carried out according to the following steps:
S101 a step of touch detection of detecting the touch action of the user on the touchable screen 10 (see Fig. 1), the touch action comprising an action of voice recording and an action of voice sending, wherein in this embodiment,
the action of voice recording is formed by the user continuously pressing the touchable screen 10 (see Fig. 1) at any position of the instant messaging interface for a pre-determined time period; and
the action of voice sending is formed by the user continuously pressing the touchable screen 10 (see Fig. 1) at the current position and then releasing, after the instruction of voice recording is sent out; and
S102 a step of action interpretation of sending out a control instruction corresponding to the touch action in response to the touch action, wherein when the touch action serves as the action of voice recording, the corresponding control instruction is an instruction of voice recording, and when the touch action is the action of voice sending, the corresponding control instruction is an instruction of voice sending; and
S103 a step of voice recording of starting recording in response to the instruction of voice recording, and, in response to the instruction of voice sending, stopping recording and sending currently recorded voice to a receiver in the instant messaging interface.

With regard to the instant messaging method of the present invention, by means of the step of touch detection, the step of action interpretation and the step of voice recording, the user continuously presses the instant messaging interface at any position to realize voice recording, and the user keeps pressing and then releases the touchable screen 10 (see Fig. 1) at the current position to realize voice sending; blind operation of voice communication is realized, thus the number of times that a user yields his/her head to operate an instant messaging device 100 (see Fig. 2) tends to zero, improving the convenience and fastness of operation to a great extent, and, taking driving as an example, thereby effectively reducing the risk of driving.

See Fig. 1, in another embodiment, the action of voice recording is formed by the user continuously pressing the touchable screen 10 at any position of the instant messaging interface for a pre-determined time period and then double clicking the touchable screen for a plurality of times. Preferably, the number of double clicks is within six. The time interval between two double clicks is 1 second, or is not greater than 1 second, preferably not greater than 0.5 second. Of course, on other embodiments, another double click time and a corresponding time interval can also be choosing, as long as the purpose of continuously pressing can be reached. The action of voice sending is formed by the user pressing and then releasing the touchable screen 10 at any position of the instant messaging interface after sending out the instruction of voice recording.

By means of the above-mentioned operation, this embodiment not only realizes blind operation of voice communication, thus the number of times that a user yields his/her head to operate an instant messaging device 100 tends to zero, improving the convenience and fastness of operation to a great extent, and, taking driving as an example, thereby effectively reducing the risk of driving, but also realizes hands-free operation, further improving the convenience and fastness of the instant messaging method and the convenient of operation.

Further, the instant messaging method further comprises: a step of prompting, in which step of prompting, a prompt signal is sent out to a user in response to an instruction of recording prompt, wherein the step of action interpretation is also configured to send out the instruction of recording prompt in response to the action of voice recording; and optionally, the instruction of recording prompt and the instruction of voice recording are simultaneously sent out by the step of action interpretation.

In this embodiment, by adding a step of prompting before recording voice, the problem that a user often speaks too early and the beginning of the voice record is not recorded due to that the user does not know when to start recording is solved.

Further, the step of prompt comprises: a step of graphic prompt, a step of vibration prompt and/or a step of audio prompt.
in the graphic prompt unit, a pre-determined prompt graph is presented in the instant messaging interface in response to the instruction of recording prompt.
optionally, the prompt graph is a virtual button 51 (see Fig. 2) centred at the current position; and
optionally, the virtual button 51 (see Fig. 2) is a circular virtual button, a square virtual button or a rectangular virtual button;
in the step of vibration prompt, the touchable screen 10 (see Fig. 1) is enabled to vibrate in response to the instruction of recording prompt; and/or
in the step of audio prompt, a prompt tone is sent out in response to the instruction of recording prompt.

Further, the touch action further comprises an action of cancelling voice-sending, a corresponding control instruction of which is an instruction of cancelling voice-sending, wherein the step of voice recording stops the recording and does not execute the voice sending operation in response to the instruction of cancelling voice-sending. In this embodiment, the convenience and fastness of using the instant messaging method is improved by adding an action of cancelling voice-sending.

Further, the action of cancelling voice-sending is a sliding operation from the current position to another position executed by the user on the touchable screen 10 (see Fig. 1) after the instruction of voice recording is sent out; and
optionally, the action of cancelling voice-sending is a sliding operation from the current position to another position along any direction.

Further, the instant messaging method also comprises:
a step of graphic prompt of presenting a virtual button 51 (see Fig. 2) centred at the current position in the instant messaging interface in response to the instruction of recording prompt;
the action of cancelling voice-sending is a sliding operation of sliding from the current position to a position other than the virtual button 51 (see Fig. 2) along any direction; and
optionally, the virtual button 51 (see Fig. 2) is a circular virtual button, a square virtual button or a rectangular virtual button;
further, in this embodiment, the action of voice recording is formed by the user continuously pressing the touchable screen 10 at any position of the instant messaging interface for a pre-determined time period; the action of voice sending is formed by the user continuously pressing the touchable screen 10 at the current position and then releasing, after the instruction of voice recording is sent out; and the action of cancelling voice-sending and the action of voice recording are actions executed continuously without releasing the touchable screen 10. In this embodiment, the convenience and fastness of using the instant messaging method is improved by adding an action of cancelling voice-sending.

Much further, in this embodiment, the action of voice recording is formed by the user continuously pressing the touchable screen 10 at any position of the instant messaging interface for a pre-determined time period and then double clicking the touchable screen for a plurality of times, wherein the double clicks refers to continuously clicking the same position or approximately the same position more than twice; the action of voice sending is formed by the user pressing and then releasing the touchable screen 10 at any position of the instant messaging interface after sending out the instruction of voice recording; The action of cancelling voice-sending is a sliding operation from the current position to another position pressed and executed by the user on any position of the instant messaging interface after the instruction of voice recording is sent out. In this embodiment, the convenience and fastness of using the instant messaging method is improved by adding an action of cancelling voice-sending.

Further, the instant messaging method also comprises: a step of voice judgement and a step of window generation.

In the step of voice judgement, a signal to noise ratio of the recorded voice is determined; and in the step of window generation, a confirmation window is generated in the instant messaging interface in response to the action of voice sending when the signal to noise ratio is lower than a pre-set threshold, so as to receive a confirmation instruction manually input by the user indicating whether it is allowed to send out the recorded voice,
wherein the step of voice recording is also configured to send the currently recorded voice to the receiver in the instant messaging interface in response to a confirmation instruction input by the user indicating that sending out is allowed when the signal to noise ratio is lower than the pre-set threshold.

By means of this embodiment, secondary confirmation of the user is added, reducing the probability of mis-operation.

Further, the instant messaging method also comprises: a step of listening state and a step of synchronization;
in the step of listening state, the number of times that the user listens to the received specific voice is recorded; and
in the step of synchronization, the number of listening times is synchronized to an instant message interface of a sender of the specific voice.

The number of listening times of the recipient is displayed by the step of listening state, and the number of listening times is synchronized to the sender through the synchronizer, further improving the usage convenience and fastness of the instant message method.

Up to this, a person skilled in the art should recognize that although a plurality of exemplary embodiments of the present invention have been shown and described in detail herein, numerous other variations or modifications can be directly determined or derived according to the contents disclosed in the present invention.

## Claims

1. An instant messaging device (100), comprising:
a touchable screen (10) for displaying an instant messaging interface and capable of receiving a touch action from a user;
a touch detector (20) for detecting the touch action of the user on the touchable screen (10), wherein the touch action comprises an action of voice recording and an action of voice sending; an action interpreter (30) for sending out a control instruction corresponding to the touch action in response to the touch action, wherein when the touch action serves as the action of voice recording, the corresponding control instruction is an instruction of voice recording, and when the touch action is the action of voice sending, the corresponding control instruction is an instruction of voice sending;
a voice recorder (40) for starting recording in response to the instruction of voice recording, and in response to the instruction of voice sending, stopping recording and sending currently recorded voice to a receiver in the instant messaging interface; **characterized by**
a listening-state device for recording the number of times that the user listens to the received specific voice; and
a synchronizer for synchronizing the number of listening times to an instant message interface of a sender of the specific voice.

2. The instant messaging device (100) according to claim 1, **characterized in that** the action of voice recording is formed by the user continuously pressing the touchable screen at any position of the instant messaging interface for a pre-determined time period; and
the action of voice sending is formed by the user continuously pressing the touchable screen (10) at a current position and then releasing after sending the instruction of voice recording.

3. The instant messaging device (100) according to claim 1, **characterized in that** the action of voice recording is formed by the user continuously pressing the touchable screen (10) at any position of the instant messaging interface for a pre-determined time period (T) and then double clicking the touchable screen (10) for a plurality of times, wherein the double clicks refers to continuously clicking a same position or approximately a same position more than twice;
the action of voice sending is formed by the user pressing and then releasing the touchable screen (10) at any position of the instant messaging interface after sending out the instruction of voice recording;
optionally, the number of double clicks is within six; and
optionally, the time interval between two double clicks is 1 second, or is not greater than 1 second, preferably not greater than 0.5 second.

4. The instant messaging device (100) according to claim 1, **characterized by** further comprising:
a prompter (50) for sending out a prompt signal to the user in response to an instruction of recording prompt,
wherein the action interpreter (30) is also configured to send out the instruction of recording prompt in response to the action of voice recording; and
optionally, the instruction of recording prompt and the instruction of voice recording are simultaneously sent out by the action interpreter (30),
wherein the prompter (50) comprises:
a graphic prompt unit for presenting a pre-determined prompt graph in the instant messaging interface in response to the instruction of recording prompt; optionally, the prompt graph is a virtual button (51) centered at a current position; and optionally, the virtual button (51) is a circular virtual button (51), a square virtual button (51) or a rectangular virtual button (51);
a vibration prompt unit for enabling the touchable screen (10) to vibrate in response to the instruction of recording prompt; and/or
an audio prompt unit for sending out a prompt tone in response to the instruction of recording prompt.

5. The instant messaging device (100) according to claim 1, **characterized in that** the touch action further comprises an action of cancelling voice-sending, a corresponding control instruction of which is an instruction of cancelling voice-sending,
wherein the voice recorder (40) stops the recording and does not execute the voice sending operation in response to the instruction of cancelling voice-sending, wherein the action of cancelling voice-sending is a sliding operation from the current position to another position executed by the user on the touchable screen (10) after the instruction of voice recording is sent out; and
optionally, the action of cancelling voice-sending is a sliding operation from the current position to another position along any direction.

6. The instant messaging device (100) according to claim 5, **characterized by** further comprising:
a graphic prompt unit for presenting a virtual button (51) centered at the current position in the instant messaging interface in response to an instruction of recording prompt;
the action of cancelling voice-sending is a sliding operation of sliding from the current position to a position other than the virtual button (51) along any direction; and
optionally, the virtual button (51) is a circular virtual button (51), a square virtual button (51) or a rectangular virtual button (51),
wherein the action of voice recording is formed by the user continuously pressing the touchable screen (10) at any position of the instant messaging interface for a pre-determined time period (T);
the action of voice sending is formed by the user continuously pressing the touchable screen (10) at the current position and then releasing after sending the instruction of voice recording; and
the action of cancelling voice-sending and the action of voice recording are actions executed continuously without releasing the touchable screen (10).

7. The instant messaging device (100) according to any one of claims 1-6, **characterized by** further comprising:
a voice judger (60) for determining a signal to noise ratio of the recorded voice; and
a window generator (70) for generating a confirmation window in the instant messaging interface in response to the action of voice sending when the signal to noise ratio is lower than a pre-set threshold, and for receiving a confirmation instruction manually input by the user indicating whether it is allowed to send out the recorded voice;
wherein the voice recorder (40) is also configured to send the currently recorded voice to the receiver in the instant messaging interface in response to a confirmation instruction input by the user indicating that sending out is allowed when the signal to noise ratio is lower than the pre-set threshold.

8. An instant messaging method applied to a device (100) with a touchable screen (10), wherein the touchable screen (10) is used for displaying an instant messaging interface and is capable of receiving a touch action from a user, wherein the instant messaging method is carried out according to the following steps:
a step (S101) of touch detection of detecting the touch action of the user on the touchable screen (10), wherein the touch action comprises an action of voice recording and an action of voice sending;
a step (S102) of action interpretation of sending out a control instruction corresponding to the touch action in response to the touch action, wherein when the touch action serves as the action of voice recording, the corresponding control instruction is an instruction of voice recording, and when the touch action is the action of voice sending, the corresponding control instruction is an instruction of voice sending; and
a step (S103) of voice recording of starting recording in response to the instruction of voice recording, and in response to the instruction of voice sending, stopping recording and sending the currently recorded voice to a receiver in the instant messaging interface;
**characterized by**
a step of listening state of recording the number of times that the user listens to the received specific voice; and
a step of synchronization of synchronizing the number of listening times to an instant message interface of a sender of the specific voice.

9. The instant messaging method according to claim 8, **characterized in that** the action of voice recording is formed by the user continuously pressing the touchable screen at any position of the instant messaging interface for a pre-determined time period; and
the action of voice sending is formed by the user continuously pressing the touchable screen (10) at the current position and then releasing after sending the instruction of voice recording.

10. The instant messaging method according to claim 8, **characterized in that** the action of voice recording is formed by the user continuously pressing the touchable screen (10) at any position of the instant messaging interface for a pre-determined time period (T) and then double clicking the touchable screen (10) for a plurality of times, wherein the double clicks refers to continuously clicking a same position or approximately a same position more than twice;
the action of voice sending is formed by the user pressing and then releasing the touchable screen (10), after sending out the instruction of voice recording;
optionally, the number of double clicks is within six; and
optionally, the time interval between two double clicks is 1 second, or is not greater than 1 second, preferably not greater than 0.5 second.

11. The instant messaging method according to claim 8, **characterized by** further comprising:
a step of prompting of sending out a prompt signal to a user in response to an instruction of recording prompt,
wherein the step of action interpretation is also configured to send out the instruction of recording prompt in response to the action of voice recording; and
optionally, the instruction of recording prompt and the instruction of voice recording are simultaneously sent out by the step of action interpretation,
wherein the prompt step comprises:
a step of graphic prompt of presenting a pre-determined prompt graph in the instant messaging interface in response to the instruction of recording prompt; optionally, the prompt graph is a virtual button (51) centered at the current position; and optionally, the virtual button (51) is a circular virtual button (51), a square virtual button (51) or a rectangular virtual button (51);
a step of vibration prompt of enabling the touchable screen (10) to vibrate in response to the instruction of recording prompt; and/or
a step of audio prompt of sending out a prompt tone in response to the instruction of recording prompt.

12. The instant messaging method according to claim 8, **characterized in that** the touch action further comprises an action of cancelling voice-sending, and a corresponding control instruction is an instruction of cancelling voice-sending,
wherein the step of voice recording stops the recording and does not execute the voice sending operation in response to the instruction of cancelling voice-sending,
wherein the action of cancelling voice-sending is a sliding operation from the current position to another position executed by the user on the touchable screen (10) after the instruction of voice recording is sent out; and
optionally, the action of cancelling voice-sending is a sliding operation from the current position to another position along any direction.

13. The instant messaging method according to claim 12, **characterized by** further comprising:
a step of graphic prompt of presenting a virtual button (51) centred at the current position in the instant messaging interface in response to an instruction of recording prompt;
the action of cancelling voice-sending is a sliding operation of sliding from the current position to a position other than the virtual button (51) along any direction; and
optionally, the virtual button (51) is a circular virtual button (51), a square virtual button (51) or a rectangular virtual button (51).

14. The instant messaging method according to any one of claims 8 to 13, **characterized in that** the action of voice recording is formed by the user continuously pressing the touchable screen (10) at any position of the instant messaging interface for a pre-determined time period (T); and
the action of voice sending is formed by the user continuously pressing the touchable screen (10) at the current position and then releasing after sending the instruction of voice recording; and
the action of cancelling voice-sending and the action of voice recording are actions executed continuously without releasing the touchable screen (10).

15. The instant messaging method according to any one of claims 8 to 14, **characterized by** further comprising:
a step of voice judgement of determining a signal to noise ratio of the recorded voice; and
a step of window generation of generating a confirmation window in the instant messaging interface in response to the action of voice sending when the signal to noise ratio is lower than a pre-set threshold, so as to receive a confirmation instruction manually input by the user indicating whether it is allowed to send out the recorded voice;
wherein the step of voice recording is also configured to send the currently recorded voice to a receiver in the instant messaging interface in response to a confirmation instruction input by the user indicating that sending out is allowed when the signal to noise ratio is lower than the pre-set threshold.

## Patentansprüche

1. Sofortnachrichtenvorrichtung (100), umfassend:
einen berührbaren Bildschirm (10), der zum Anzeigen einer Sofortnachrichtenoberfläche dient und zum Empfangen einer Berührungshandlung von einem Benutzer in der Lage ist;
eine Berührungserkennungseinheit (20) zum Erkennen der Berührungshandlung des Benutzers auf dem berührbaren Bildschirm (10), wobei die Berührungshandlung eine Sprachaufzeichnungshandlung und eine Sprachsendehandlung umfasst; eine Handlungsauswerteeinheit (30) zum Senden eines der Berührungshandlung entsprechenden Steuerbefehls als Reaktion auf die Berührungshandlung, wobei, wenn die Berührungshandlung als Sprachaufzeichnungshandlung dient, der entsprechende Steuerbefehl ein Sprachaufzeichnungsbefehl ist, und, wenn die Berührungshandlung die Sprachsendehandlung ist, der entsprechende Steuerbefehl ein Sprachsendebefehl ist;
eine Sprachaufzeichnungseinheit (40) zum Starten der Aufzeichnung als Reaktion auf den Sprachaufzeichnungsbefehl und, als Reaktion auf den Sprachsendebefehl, zum Beenden der Aufzeichnung und Senden der aktuellen Sprachaufzeichnung an einen Empfänger in der Sofortnachrichtenoberfläche;
**gekennzeichnet durch**
eine Abhörstatusvorrichtung zum Aufzeichnen, wie oft der Benutzer die jeweilige empfangene Sprachaufzeichnung abhört; und
eine Synchronisiereinheit zum Synchronisieren der Anzahl der Abhörvorgänge mit einer Sofortnachrichtenoberfläche eines Absenders der jeweiligen Sprachaufzeichnung.

2. Sofortnachrichtenvorrichtung (100) nach Anspruch 1, **dadurch gekennzeichnet, dass** die Sprachaufzeichnungshandlung dadurch gebildet wird, dass der Benutzer den berührbaren Bildschirm an einer beliebigen Stelle der Sofortnachrichtenoberfläche für einen vorbestimmten Zeitraum gedrückt hält; und
die Sprachsendehandlung dadurch gebildet wird, dass der Benutzer den berührbaren Bildschirm (10) an einer aktuellen Stelle gedrückt hält und dann nach dem Senden des Sprachaufzeichnungsbefehls loslässt.

3. Sofortnachrichtenvorrichtung (100) nach Anspruch 1, **dadurch gekennzeichnet, dass** die Sprachaufzeichnungshandlung dadurch gebildet wird, dass der Benutzer den berührbaren Bildschirm (10) an einer beliebigen Stelle der Sofortnachrichtenoberfläche für einen vorbestimmten Zeitraum (T) gedrückt hält und danach den berührbaren Bildschirm (10) mehrfach doppelklickt, wobei sich das Doppelklicken darauf bezieht, dieselbe Stelle oder ungefähr dieselbe Stelle mehr als zweimal angeklickt zu halten;
die Sprachsendehandlung dadurch gebildet wird, dass der Benutzer nach dem Senden des Sprachaufzeichnungsbefehls den berührbaren Bildschirm (10) an einer beliebigen Stelle der Sofortnachrichtenoberfläche drückt und dann loslässt;
optional die Anzahl der Doppelklicks maximal sechs beträgt; und
optional das Zeitintervall zwischen zwei Doppelklicks 1 Sekunde beträgt oder nicht größer als 1 Sekunde ist, vorzugsweise nicht größer als 0,5 Sekunden.

4. Sofortnachrichtenvorrichtung (100) nach Anspruch 1, **dadurch gekennzeichnet, dass** sie ferner umfasst:
eine Eingabeaufforderungseinheit (50) zum Senden eines Eingabeaufforderungssignals an den Benutzer als Reaktion auf einen Aufzeichnungseingabeaufforderungsbefehl,
wobei die Handlungsauswerteeinheit (30) außerdem dazu konfiguriert ist, als Reaktion auf die Sprachaufzeichnungshandlung den Aufzeichnungseingabeaufforderungsbefehl zu senden; und
optional der Aufzeichnungseingabeaufforderungsbefehl und der Sprachaufzeichnungsbefehl gleichzeitig von der Handlungsauswerteeinheit (30) gesendet werden,
wobei die Eingabeaufforderungseinheit (50) umfasst:
ein Grafikeingabeaufforderungselement zum Darstellen einer vorbestimmten Eingabeaufforderungsgrafik in der Sofortnachrichtenoberfläche als Reaktion auf den Aufzeichnungseingabeaufforderungsbefehl; wobei optional die Eingabeaufforderungsgrafik eine an einer aktuellen Stelle zentrierte virtuelle Taste (51) ist; und optional die virtuelle Taste (51) eine kreisförmige virtuelle Taste (51), eine quadratische virtuelle Taste (51) oder eine rechteckige virtuelle Taste (51) ist;
ein Vibrationseingabeaufforderungselement, das den berührbaren Bildschirm (10) dazu befähigt, als Reaktion auf den Aufzeichnungseingabeaufforderungsbefehl zu vibrieren; und/oder
ein Audioeingabeaufforderungselement zum Senden eines Eingabeaufforderungstons als Reaktion auf den Aufzeichnungseingabeaufforderungsbefehl.

5. Sofortnachrichtenvorrichtung (100) nach Anspruch 1, **dadurch gekennzeichnet, dass** die Berührungshandlung ferner eine Sprachsendeabbruchhandlung umfasst, deren entsprechender Steuerbefehl ein Sprachsendeabbruchbefehl ist,
wobei die Sprachaufzeichnungseinheit (40) als Reaktion auf den Sprachsendeabbruchbefehl die Aufzeichnung beendet und den Sprachsendevorgang nicht ausführt,
wobei die Sprachsendeabbruchhandlung ein nach dem Senden des Sprachaufzeichnungsbefehls von dem Benutzer auf dem berührbaren Bildschirm (10) ausgeführter Gleitvorgang von der aktuellen Stelle zu einer anderen Stelle ist; und
optional die Sprachsendeabbruchhandlung ein Gleitvorgang von der aktuellen Stelle zu einer anderen Stelle in einer beliebigen Richtung ist.

6. Sofortnachrichtenvorrichtung (100) nach Anspruch 5, **dadurch gekennzeichnet, dass** sie ferner umfasst:
ein Grafikeingabeaufforderungselement zum Darstellen einer an der aktuellen Stelle in der Sofortnachrichtenoberfläche zentrierten virtuellen Taste (51) als Reaktion auf einen Aufzeichnungseingabeaufforderungsbefehl;
wobei die Sprachsendeabbruchhandlung ein Gleitvorgang des Gleitens von der aktuellen Stelle in einer beliebigen Richtung zu einer Stelle ist, die nicht die virtuelle Taste (51) ist; und
optional die virtuelle Taste (51) eine kreisförmige virtuelle Taste (51), eine quadratische virtuelle Taste (51) oder eine rechteckige virtuelle Taste (51) ist,
wobei die Sprachaufzeichnungshandlung dadurch gebildet wird, dass der Benutzer den berührbaren Bildschirm (10) an einer beliebigen Stelle der Sofortnachrichtenoberfläche für einen vorbestimmten Zeitraum (T) gedrückt hält;
die Sprachsendehandlung dadurch gebildet wird, dass der Benutzer den berührbaren Bildschirm (10) an der aktuellen Stelle gedrückt hält und dann nach dem Senden des Sprachaufzeichnungsbefehls loslässt; und
die Sprachsendeabbruchhandlung und die Sprachaufzeichnungshandlung Handlungen sind, die ohne ein Loslassen des berührbaren Bildschirms (10) kontinuierlich ausgeführt werden.

7. Sofortnachrichtenvorrichtung (100) nach einem der Ansprüche 1-6, **dadurch gekennzeichnet, dass** sie ferner umfasst:
eine Sprachbeurteilungseinheit (60) zum Bestimmen eines Signal/Rausch-Verhältnisses der Sprachaufzeichnung; und
eine Fenstererzeugungseinheit (70) zum Erzeugen eines Bestätigungsfensters in der Sofortnachrichtenoberfläche als Reaktion auf die Sprachsendehandlung, wenn das Signal/Rausch-Verhältnis unter einem vorgegebenen Grenzwert liegt, und zum Empfangen eines Bestätigungsbefehls, den der Benutzer manuell eingibt und der anzeigt, ob das Senden der Sprachaufzeichnung erlaubt ist;
wobei die Sprachaufzeichnungseinheit (40) außerdem dazu konfiguriert ist, als Reaktion auf einen von dem Benutzer eingegebenen Bestätigungsbefehl, der anzeigt, dass das Senden erlaubt ist, wenn das Signal/Rausch-Verhältnis unter dem vorgegebenen Grenzwert liegt, die aktuelle Sprachaufzeichnung an den Empfänger in der Sofortnachrichtenoberfläche zu senden.

8. Sofortnachrichtenverfahren, das auf eine Vorrichtung (100) mit einem berührbaren Bildschirm (10) angewendet wird, wobei der berührbare Bildschirm (10) zum Anzeigen einer Sofortnachrichtenoberfläche dient und zum Empfangen einer Berührungshandlung von einem Benutzer in der Lage ist, wobei das Sofortnachrichtenverfahren entsprechend folgender Schritte ausgeführt wird:
ein Schritt (S101) der Berührungserkennung zum Erkennen der Berührungshandlung des Benutzers auf dem berührbaren Bildschirm (10), wobei die Berührungshandlung eine Sprachaufzeichnungshandlung und eine Sprachsendehandlung umfasst;
ein Schritt (S102) der Handlungsauswertung zum Senden eines der Berührungshandlung entsprechenden Steuerbefehls als Reaktion auf die Berührungshandlung, wobei, wenn die Berührungshandlung als Sprachaufzeichnungshandlung dient, der entsprechende Steuerbefehl ein Sprachaufzeichnungsbefehl ist, und, wenn die Berührungshandlung die Sprachsendehandlung ist, der entsprechende Steuerbefehl ein Sprachsendebefehl ist; und
ein Schritt (S103) der Sprachaufzeichnung zum Starten der Aufzeichnung als Reaktion auf den Sprachaufzeichnungsbefehl und, als Reaktion auf den Sprachsendebefehl, zum Beenden der Aufzeichnung und Senden der aktuellen Sprachaufzeichnung an einen Empfänger in der Sofortnachrichtenoberfläche;
**gekennzeichnet durch**
einen Schritt des Abhörstatus zum Aufzeichnen, wie oft der Benutzer die jeweilige empfangene Sprachaufzeichnung abhört; und
einen Schritt der Synchronisierung zum Synchronisieren der Anzahl der Abhörvorgänge mit einer Sofortnachrichtenoberfläche eines Absenders der jeweiligen Sprachaufzeichnung.

9. Sofortnachrichtenverfahren nach Anspruch 8, **dadurch gekennzeichnet, dass** die Sprachaufzeichnungshandlung dadurch gebildet wird, dass der Benutzer den berührbaren Bildschirm an einer beliebigen Stelle der Sofortnachrichtenoberfläche für einen vorbestimmten Zeitraum gedrückt hält; und
die Sprachsendehandlung dadurch gebildet wird, dass der Benutzer den berührbaren Bildschirm (10) an der aktuellen Stelle gedrückt hält und dann nach dem Senden des Sprachaufzeichnungsbefehls loslässt.

10. Sofortnachrichtenverfahren nach Anspruch 8, **dadurch gekennzeichnet, dass** die Sprachaufzeichnungshandlung dadurch gebildet wird, dass der Benutzer den berührbaren Bildschirm (10) an einer beliebigen Stelle der Sofortnachrichtenoberfläche für einen vorbestimmten Zeitraum (T) gedrückt hält und danach den berührbaren Bildschirm (10) mehrfach doppelklickt, wobei sich das Doppelklicken darauf bezieht, dieselbe Stelle oder ungefähr dieselbe Stelle mehr als zweimal angeklickt zu halten;
die Sprachsendehandlung dadurch gebildet wird, dass der Benutzer nach dem Senden des Sprachaufzeichnungsbefehls den berührbaren Bildschirm (10) drückt und dann loslässt;
optional die Anzahl der Doppelklicks maximal sechs beträgt; und
optional das Zeitintervall zwischen zwei Doppelklicks 1 Sekunde beträgt oder nicht größer als 1 Sekunde ist, vorzugsweise nicht größer als 0,5 Sekunden.

11. Sofortnachrichtenverfahren nach Anspruch 8, **dadurch gekennzeichnet, dass** es ferner umfasst:
einen Schritt der Eingabeaufforderung zum Senden eines Eingabeaufforderungssignals an einen Benutzer als Reaktion auf einen Aufzeichnungseingabeaufforderungsbefehl,
wobei der Schritt der Handlungsauswertung außerdem dazu konfiguriert ist, als Reaktion auf die Sprachaufzeichnungshandlung den Aufzeichnungseingabeaufforderungsbefehl zu senden; und
optional der Aufzeichnungseingabeaufforderungsbefehl und der Sprachaufzeichnungsbefehl gleichzeitig durch den Schritt der Handlungsauswertung gesendet werden,
wobei der Eingabeaufforderungsschritt umfasst:
einen Schritt der Grafikeingabeaufforderung zum Darstellen einer vorbestimmten Eingabeaufforderungsgrafik in der Sofortnachrichtenoberfläche als Reaktion auf den Aufzeichnungseingabeaufforderungsbefehl; wobei optional die Eingabeaufforderungsgrafik eine an der aktuellen Stelle zentrierte virtuelle Taste (51) ist; und optional die virtuelle Taste (51) eine kreisförmige virtuelle Taste (51), eine quadratische virtuelle Taste (51) oder eine rechteckige virtuelle Taste (51) ist;
einen Schritt der Vibrationseingabeaufforderung, der den berührbaren Bildschirm (10) dazu befähigt, als Reaktion auf den Aufzeichnungseingabeaufforderungsbefehl zu vibrieren; und/oder
einen Schritt der Audioeingabeaufforderung zum Senden eines Eingabeaufforderungstons als Reaktion auf den Aufzeichnungseingabeaufforderungsbefehl.

12. Sofortnachrichtenverfahren nach Anspruch 8, **dadurch gekennzeichnet, dass** die Berührungshandlung ferner eine Sprachsendeabbruchhandlung umfasst und ein entsprechender Steuerbefehl ein Sprachsendeabbruchbefehl ist,
wobei der Schritt der Sprachaufzeichnung als Reaktion auf den Sprachsendeabbruchbefehl die Aufzeichnung beendet und den Sprachsendevorgang nicht ausführt,
wobei die Sprachsendeabbruchhandlung ein nach dem Senden des Sprachaufzeichnungsbefehls von dem Benutzer auf dem berührbaren Bildschirm (10) ausgeführter Gleitvorgang von der aktuellen Stelle zu einer anderen Stelle ist; und
optional die Sprachsendeabbruchhandlung ein Gleitvorgang von der aktuellen Stelle zu einer anderen Stelle in einer beliebigen Richtung ist.

13. Sofortnachrichtenverfahren nach Anspruch 12, **dadurch gekennzeichnet, dass** es ferner umfasst:
einen Schritt der Grafikeingabeaufforderung zum Darstellen einer an der aktuellen Stelle in der Sofortnachrichtenoberfläche zentrierten virtuellen Taste (51) als Reaktion auf einen Aufzeichnungseingabeaufforderungsbefehl;
wobei die Sprachsendeabbruchhandlung ein Gleitvorgang des Gleitens von der aktuellen Stelle in einer beliebigen Richtung zu einer Stelle ist, die nicht die virtuelle Taste (51) ist; und
optional die virtuelle Taste (51) eine kreisförmige virtuelle Taste (51), eine quadratische virtuelle Taste (51) oder eine rechteckige virtuelle Taste (51) ist.

14. Sofortnachrichtenverfahren nach einem der Ansprüche 8 bis 13, **dadurch gekennzeichnet, dass** die Sprachaufzeichnungshandlung dadurch gebildet wird, dass der Benutzer den berührbaren Bildschirm (10) an einer beliebigen Stelle der Sofortnachrichtenoberfläche für einen vorbestimmten Zeitraum (T) gedrückt hält; und
die Sprachsendehandlung dadurch gebildet wird, dass der Benutzer den berührbaren Bildschirm (10) an der aktuellen Stelle gedrückt hält und dann nach dem Senden des Sprachaufzeichnungsbefehls loslässt; und
die Sprachsendeabbruchhandlung und die Sprachaufzeichnungshandlung Handlungen sind, die ohne ein Loslassen des berührbaren Bildschirms (10) kontinuierlich ausgeführt werden.

15. Sofortnachrichtenverfahren nach einem der Ansprüche 8 bis 14, **dadurch gekennzeichnet, dass** es ferner umfasst:
einen Schritt der Sprachbeurteilung zum Bestimmen eines Signal/Rausch-Verhältnisses der Sprachaufzeichnung; und
einen Schritt der Fenstererzeugung zum Erzeugen eines Bestätigungsfensters in der Sofortnachrichtenoberfläche als Reaktion auf die Sprachsendehandlung, wenn das Signal/Rausch-Verhältnis unter einem vorgegebenen Grenzwert liegt, um dadurch einen Bestätigungsbefehl zu empfangen, den der Benutzer manuell eingibt und der anzeigt, ob das Senden der Sprachaufzeichnung erlaubt ist;
wobei der Schritt der Sprachaufzeichnung außerdem dazu konfiguriert ist, als Reaktion auf einen von dem Benutzer eingegebenen Bestätigungsbefehl, der anzeigt, dass das Senden erlaubt ist, wenn das Signal/Rausch-Verhältnis unter dem vorgegebenen Grenzwert liegt, die aktuelle Sprachaufzeichnung an einen Empfänger in der Sofortnachrichtenoberfläche zu senden.

## Revendications

1. Dispositif de messagerie instantanée (100), comprenant :
un écran tactile (10) destiné à afficher une interface de messagerie instantanée et apte à recevoir une action tactile d'un utilisateur ;
un détecteur tactile (20) destiné à détecter l'action tactile de l'utilisateur sur l'écran tactile (10), l'action tactile comprenant une action d'enregistrement vocal et une action d'émission vocale ; un interpréteur d'action (30) destiné à émettre une instruction de commande correspondant à l'action tactile en réaction à l'action tactile, où, si l'action tactile sert d'action d'enregistrement vocal, l'instruction de commande correspondante est une instruction d'enregistrement vocal, et, si l'action tactile est l'action d'émission vocale, l'instruction de commande correspondante est une instruction d'émission vocale ;
un enregistreur vocal (40) destiné à lancer un enregistrement en réaction à l'instruction d'enregistrement vocal, et, en réaction à l'instruction d'émission vocale, arrêter l'enregistrement et adresser l'enregistrement vocal actuel à un récepteur de l'interface de messagerie instantanée ; **caractérisé par**
un dispositif d'état d'écoute destiné à enregistrer le nombre d'écoutes par l'utilisateur de la voix spécifique reçue ; et
un synchroniseur destiné à synchroniser le nombre d'écoutes vers une interface de messagerie instantanée d'un émetteur de la voix spécifique.

2. Dispositif de messagerie instantanée (100) selon la revendication 1, **caractérisé en ce que** l'action d'enregistrement vocal est formée par l'utilisateur exerçant une pression continue sur l'écran tactile à n'importe quel emplacement de l'interface de messagerie instantanée pendant une durée définie ; et
l'action d'émission vocale est formée par l'utilisateur exerçant une pression continue sur l'écran tactile (10) à un emplacement actuel, avant de relâcher celle-ci après envoi de l'instruction d'enregistrement vocal.

3. Dispositif de messagerie instantanée (100) selon la revendication 1, **caractérisé en ce que** l'action d'enregistrement vocal est formée par l'utilisateur exerçant une pression continue sur l'écran tactile (10) à n'importe quel emplacement de l'interface de messagerie instantanée pendant une durée définie (T) avant de double-cliquer sur l'écran tactile (10) une pluralité de fois, les doubles-clics équivalant à cliquer de manière continue plus de deux fois sur un même emplacement ou sensiblement sur un même emplacement ;
l'action d'émission vocale est formée par l'utilisateur exerçant une pression sur l'écran tactile (10) puis relâchant celle-ci à n'importe quel emplacement de l'interface de messagerie instantanée après émission de l'instruction d'enregistrement vocal ;
facultativement, le nombre de doubles-clics est inférieur ou égal à six ; et facultativement, l'intervalle temporel entre deux doubles-clics est de 1 seconde, ou n'est pas supérieur à 1 seconde, de préférence non supérieur à 0,5 seconde.

4. Dispositif de messagerie instantanée (100) selon la revendication 1, **caractérisé en ce qu'**il comprend en outre :
un dispositif d'invite (50) destiné à adresser un signal d'invite à l'utilisateur en réaction à une instruction d'invite d'enregistrement,
où l'interpréteur d'action (30) est également prévu pour adresser l'instruction d'invite d'enregistrement en réaction à l'action d'enregistrement vocal ; et
facultativement, l'instruction d'invite d'enregistrement et l'instruction d'enregistrement vocal sont émises simultanément par l'interpréteur d'action (30),
où le dispositif d'invite (50) comprend :
une unité d'invite graphique destinée à présenter un graphique d'invite défini dans l'interface de messagerie instantanée en réaction à l'instruction d'invite d'enregistrement ; facultativement, le graphique d'invite est un bouton virtuel (51) centré à un emplacement actuel ; et, facultativement, le bouton virtuel (51) est un bouton virtuel circulaire (51), un bouton virtuel carré (51) ou un bouton virtuel rectangulaire (51) ;
une unité d'invite vibratoire permettant à l'écran tactile (10) de vibrer en réaction à l'instruction d'invite d'enregistrement ; et/ou
une unité d'invite audio destinée à émettre une tonalité d'invite en réaction à l'instruction d'invite d'enregistrement.

5. Dispositif de messagerie instantanée (100) selon la revendication 1, **caractérisé en ce que** l'action tactile comprend en outre une action d'annulation d'émission vocale, une instruction de commande correspondante, laquelle est une instruction d'annulation d'émission vocale,
où l'enregistreur vocal (40) arrête l'enregistrement et n'exécute pas l'opération d'émission vocale en réaction à l'instruction d'annulation d'émission vocale, l'action d'annulation d'émission vocale étant une opération de glissement de l'emplacement actuel vers un autre emplacement, exécutée par l'utilisateur sur l'écran tactile (10) après émission de l'instruction d'enregistrement vocal ; et
facultativement, l'action d'annulation d'émission vocale est une opération de glissement de l'emplacement actuel vers un autre emplacement dans une direction quelconque.

6. Dispositif de messagerie instantanée (100) selon la revendication 5, **caractérisé en ce qu'**il comprend en outre :
une unité d'invite graphique destinée à présenter un bouton virtuel (51) centré à l'emplacement actuel dans l'interface de messagerie instantanée en réaction à une instruction d'invite d'enregistrement ;
l'action d'annulation d'émission vocale est opération de glissement de glissement de l'emplacement actuel vers un emplacement autre que le bouton virtuel (51) dans une direction quelconque ; et
facultativement, le bouton virtuel (51) est un bouton virtuel circulaire (51), un bouton virtuel carré (51) ou un bouton virtuel rectangulaire (51),
où l'action d'enregistrement vocal est formée par l'utilisateur exerçant une pression continue sur l'écran tactile (10) à n'importe quel emplacement de l'interface de messagerie instantanée pendant une durée définie (T) ;
l'action d'émission vocale est formée par l'utilisateur exerçant une pression continue sur l'écran tactile (10) à l'emplacement actuel, avant de relâcher celle-ci après envoi de l'instruction d'enregistrement vocal ; et
l'action d'annulation d'émission vocale et l'action d'enregistrement vocal sont des actions exécutées de manière continue sans relâchement de l'écran tactile (10).

7. Dispositif de messagerie instantanée (100) selon l'une des revendications 1 à 6, **caractérisé en ce qu'**il comprend en outre :
un dispositif de jugement vocal (60) destiné à déterminer un rapport signal sur bruit de la voix enregistrée ; et
un générateur de fenêtre (70) destiné à générer une fenêtre de confirmation dans l'interface de messagerie instantanée en réaction à l'action d'émission vocale si le rapport signal sur bruit est inférieur à un seuil défini, et à recevoir une instruction de confirmation entrée manuellement par l'utilisateur, indiquant s'il est permis d'émettre la voix enregistrée ;
où l'enregistreur vocal (40) est également prévu pour adresser l'enregistrement vocal actuel au récepteur de l'interface de messagerie instantanée en réaction à une entrée d'instruction de confirmation par l'utilisateur, indiquant que l'émission est permise si le rapport signal sur bruit est inférieur au seuil défini.

8. Procédé de messagerie instantanée appliqué à un dispositif (100) avec un écran tactile (10), où l'écran tactile (10) est utilisé pour afficher une interface de messagerie instantanée et est apte à recevoir une action tactile d'un utilisateur,
où
ledit procédé de messagerie instantanée est exécuté conformément aux étapes suivantes :
une étape (S101) de détection tactile de l'action tactile de l'utilisateur sur l'écran tactile (10), l'action tactile comprenant une action d'enregistrement vocal et une action d'émission vocale ;
une étape (S102) d'interprétation d'action, où une instruction de commande correspondant à l'action tactile est émise en réaction à l'action tactile, où, si l'action tactile sert d'action d'enregistrement vocal, l'instruction de commande correspondante est une instruction d'enregistrement vocal, et si l'action tactile est l'action d'émission vocale, l'instruction de commande correspondante est une instruction d'émission vocale ; et
une étape (S103) d'enregistrement vocal, où un enregistrement est lancé en réaction à l'instruction d'enregistrement vocal, et où, en réaction à l'instruction d'émission vocale, l'enregistrement est arrêté et l'enregistrement vocal actuel est adressé à un récepteur de l'interface de messagerie instantanée ;
**caractérisé par**
une étape d'état d'écoute, où le nombre d'écoutes par l'utilisateur de la voix spécifique reçue est enregistré ; et
une étape de synchronisation, où le nombre d'écoutes vers une interface de messagerie instantanée d'un émetteur de la voix spécifique est synchronisé.

9. Procédé de messagerie instantanée selon la revendication 8, **caractérisé en ce que** l'action d'enregistrement vocal est formée par l'utilisateur exerçant une pression continue sur l'écran tactile à n'importe quel emplacement de l'interface de messagerie instantanée pendant une durée définie ; et
l'action d'émission vocale est formée par l'utilisateur exerçant une pression continue sur l'écran tactile (10) à l'emplacement actuel, avant de relâcher celle-ci après envoi de l'instruction d'enregistrement vocal.

10. Procédé de messagerie instantanée selon la revendication 8, **caractérisé en ce que** l'action d'enregistrement vocal est formée par l'utilisateur exerçant une pression continue sur l'écran tactile (10) à n'importe quel emplacement de l'interface de messagerie instantanée pendant une durée définie (T) avant de double-cliquer sur l'écran tactile (10) une pluralité de fois, les doubles-clics équivalant à cliquer de manière continue plus de deux fois sur un même emplacement ou sensiblement sur un même emplacement ;
l'action d'émission vocale est formée par l'utilisateur exerçant une pression sur l'écran tactile (10) puis relâchant celle-ci après émission de l'instruction d'enregistrement vocal ;
facultativement, le nombre de doubles-clics est inférieur ou égal à six ; et facultativement, l'intervalle temporel entre deux doubles-clics est de 1 seconde, ou n'est pas supérieur à 1 seconde, de préférence non supérieur à 0,5 seconde.

11. Procédé de messagerie instantanée selon la revendication 8, **caractérisé en ce qu'**il comprend en outre :
une étape d'invite, où un signal d'invite est adressé à l'utilisateur en réaction à une instruction d'invite d'enregistrement,
l'étape d'interprétation d'action étant également prévue pour adresser l'instruction d'invite d'enregistrement en réaction à l'action d'enregistrement vocal ; et
facultativement, l'instruction d'invite d'enregistrement et l'instruction d'enregistrement vocal sont émises simultanément lors de l'étape d'interprétation d'action,
où l'étape d'invite comprend :
une étape d'invite graphique, où un graphique d'invite défini est présenté dans l'interface de messagerie instantanée en réaction à l'instruction d'invite d'enregistrement ; facultativement, le graphique d'invite est un bouton virtuel (51) centré à l'emplacement actuel ; et, facultativement, le bouton virtuel (51) est un bouton virtuel circulaire (51), un bouton virtuel carré (51) ou un bouton virtuel rectangulaire (51) ;
une étape d'invite vibratoire permettant à l'écran tactile (10) de vibrer en réaction à l'instruction d'invite d'enregistrement ; et/ou
une étape d'invite audio, où une tonalité d'invite est émise en réaction à l'instruction d'invite d'enregistrement.

12. Procédé de messagerie instantanée selon la revendication 8, **caractérisé en ce que** l'action tactile comprend en outre une action d'annulation d'émission vocale, et **en ce qu'**une instruction de commande correspondante est une instruction d'annulation d'émission vocale, l'étape d'enregistrement vocal arrêtant l'enregistrement et n'exécutant pas l'opération d'émission vocale en réaction à l'instruction d'annulation d'émission vocale,
où l'action d'annulation d'émission vocale est une opération de glissement de l'emplacement actuel vers un autre emplacement, exécutée par l'utilisateur sur l'écran tactile (10) après émission de l'instruction d'enregistrement vocal ; et
facultativement, l'action d'annulation d'émission vocale est une opération de glissement de l'emplacement actuel vers un autre emplacement dans une direction quelconque.

13. Procédé de messagerie instantanée selon la revendication 12, **caractérisé en ce qu'**il comprend en outre :
une étape d'invite graphique, où un bouton virtuel (51) est présenté, centré à l'emplacement actuel dans l'interface de messagerie instantanée en réaction à une instruction d'invite d'enregistrement ;
l'action d'annulation d'émission vocale étant une opération de glissement de l'emplacement actuel vers un emplacement autre que le bouton virtuel (51) dans une direction quelconque ; et
facultativement, le bouton virtuel (51) est un bouton virtuel circulaire (51), un bouton virtuel carré (51) ou un bouton virtuel rectangulaire (51).

14. Procédé de messagerie instantanée selon l'une des revendications 8 à 13, **caractérisé en ce que** l'action d'enregistrement vocal est formée par l'utilisateur exerçant une pression continue sur l'écran tactile (10) à n'importe quel emplacement de l'interface de messagerie instantanée pendant une durée définie (T) ; et
l'action d'émission vocale est formée par l'utilisateur exerçant une pression continue sur l'écran tactile (10) à l'emplacement actuel avant de relâcher celle-ci après envoi de l'instruction d'enregistrement vocal ; et
l'action d'annulation d'émission vocale et l'action d'enregistrement vocal sont des actions exécutées de manière continue sans relâchement de l'écran tactile (10).

15. Procédé de messagerie instantanée selon l'une des revendications 8 à 14, **caractérisé en ce qu'**il comprend en outre :
une étape de jugement vocal, où est déterminé un rapport signal sur bruit de la voix enregistrée ; et
une étape de génération de fenêtre, où est générée une fenêtre de confirmation dans l'interface de messagerie instantanée en réaction à l'action d'émission vocale si le rapport signal sur bruit est inférieur à un seuil défini, de manière à recevoir une instruction de confirmation entrée manuellement par l'utilisateur, indiquant s'il est permis d'émettre la voix enregistrée ;
où l'étape d'enregistrement vocal est également prévue pour adresser l'enregistrement vocal actuel à un récepteur dans l'interface de messagerie instantanée en réaction à une entrée d'instruction de confirmation par l'utilisateur, indiquant que l'émission est permise si le rapport signal sur bruit est inférieur au seuil défini.
